# EUROPÄISCHE PATENTSCHRIFT

(11) **EP 3 883 756 B1**
(45) Veröffentlichungstag und Bekanntmachung des Hinweises auf die Patenterteilung: **04.01.2023**
(21) Anmeldenummer: 19802038.0
(22) Anmeldetag: 06.11.2019
(51) Int. Cl.: B32B 7/09, B32B 9/02, B60N 2/58, B68F 1/00, B60R 21/05

(54) **LEDERVERBUND MIT EINER ELEKTRONIKSCHICHT**
LEATHER COMPOSITE HAVING AN ELECTRONIC LAYER
CUIR RECONSTITUÉ DOTÉ D'UNE COUCHE ÉLECTRONIQUE

(30) Priorität: 23.11.2018 AT 510312018
(43) Veröffentlichungstag der Anmeldung: 29.09.2021
(73) Patentinhaber: Wollsdorf International GmbH, 8181 Wollsdorf (AT)
(72) Erfinder: SCHNEIDER, Konstantin, 8075 Hart bei Graz (AT); KINDERMANN, Andreas, 2531 Gaaden (AT); WENAUER, Michael, 76344 Eggenstein-Leopoldshafen (DE)
(74) Vertreter: Röggla, Harald
(86) Internationale Anmeldenummer: PCT/AT2019/060375
(87) Internationale Veröffentlichungsnummer: WO 2020/102836

(56) Entgegenhaltungen:
- DE-A1-102017 111 297
- US-A1- 2010 193 108
- US-A1- 2014 042 767

## Beschreibung

Die Erfindung betrifft einen Lederverbund umfassend zumindest zwei Verbundteile, die durch einen Schichtaufbau gekennzeichnet sind, der eine aus einer Tierhaut gefertigte Lederschicht oder eine Schicht aus Kunstleder, eine, auf eine Lederoberfläche der Lederschicht oder einen Schleifgrund aufgebrachte Lederzurichtung und zumindest eine Elektronikschicht, die in die Lederzurichtung eingebracht und/oder auf die Lederzurichtung aufgebracht ist, aufweist, und ein Verfahren zur Herstellung eines derartigen Lederverbunds.

Für Lederanwendungen generell und insbesondere im Automobilbereich, beispielsweise für den Bezug von Sitzen oder Lenkrädern, existiert die verstärkte Nachfrage nach Ledermaterialien, die aus einem Lederverbund mit möglichst vielen möglichst kleinen Verbundteilen bestehen. Vorzugsweise werden diese Verbundteile aus Lederverschnitt gewonnen. Der aus solchen Verbundteilen hergestellte Lederverbund ist unter anderem günstiger und flexibler in Bezug auf das Design und seine Zusammensetzung, beispielsweise kombiniert mit Alcantara oder anderen Textilmaterialien.

Gemäß einem Verfahren, das aus dem Stand der Technik bekannt ist, werden die Verbundteile in die gewünschte Form gestanzt und nachher zu dem Lederverbund vernäht. In einem Fügeprozess wird dann eine Matte mit einer Elektronikschicht auf die Rückseite des Lederverbunds laminiert. Im Beispiel des Lenkrads wird der so hergestellte Lederverbund auf das Lenkrad aufgezogen und zum fertigen Kranz vernäht. Nachteilig ist bei einem derartigen Lederverbund, dass sich die Elektronikschicht auf der Rückseite des applizierten Lederverbunds befindet. So wird eine gewünschte Wirkung der Elektronikschicht, beispielsweise die Signale von Schaltelementen am Lenkrad oder die Heizleistung einer Lenkradheizung, erheblich verringert, da die Signale beziehungsweise die Wärme die gesamte Lederstärke durchqueren muss. Des Weiteren ist bei dem Verfahren der Fügeprozess äußerst komplex und schwierig, da die Kontaktstellen der Verbundteile bei den Verbindungen dieser genau getroffen werden müssen, um eine ausreichende Signalübertragung im Kontaktbereich zu erhalten.

Es ist somit ein Anreiz gegeben, die Elektronikschicht näher an der Oberfläche des Lederverbunds zu positionieren, um deren gewünschte Wirkung zu verbessern. Aus der EP 2 628 804 A1 ist Leder mit leitfähigen Partikeln in der Lederzurichtung bekannt, welches Leder als Lenkradummantelung, die als Elektrode dient, Anwendung findet. Mit einem derartigen Leder können aber keine komplexeren Schaltelemente ausgeführt werden, und es kann insbesondere kein Lederverbund aus miteinander verbundenen und kontaktierten Verbundteilen hergestellt werden, da die Anforderungen an die Kontaktbereiche in Bezug auf die Resistenz gegen mögliches Eindringen von Schweiß und Fett nicht erfüllt werden konnten, was wiederum der Gefahr von Kurzschlüssen nicht ausreichend vorbeugt.

Außerdem ist aus der DE102017111297 einen Leder-Nahtaufbau bekannt, welcher einen Ein-Zonen Sensor bildet.

Es ist daher die Aufgabe der vorliegenden Erfindung einen Lederverbund aus miteinander verbundenen und kontaktierten Verbundteilen und ein Verfahren zur Herstellung eines derartigen Lederverbunds bereitzustellen, bei dem die Elektronikschichten der Verbundteile möglichst nahe an der Oberfläche positioniert sind.

Die vorliegende Erfindung löst diese Aufgabe durch Bereitstellung eines Lederverbunds, bei dem zumindest zwei Verbundteile mit einander zugewandten Oberflächen der Lederzurichtung und/ oder der Elektronikschichten entlang zumindest einer Nahtstelle einer Verbindung mechanisch miteinander vernäht sind, wobei die Elektronikschichten der Verbundteile in zumindest einem Kontaktbereich der Verbindung, welcher Kontaktbereich einen größeren Abstand zu einer Sichtfläche des Lederverbunds aufweist als die Nahtstelle, zusätzlich zumindest einen gemeinsamen elektrischen Kontakt ausbilden.

Die Sichtfläche bildet nach der Applikation beziehungsweise in Einbaulage des Lederverbunds die Oberfläche des Lederverbunds, ist also im größten Ausmaß der Benutzung durch einen Benutzer sowie den Einflüssen der Umwelt ausgesetzt. Im Beispiel des Lenkrads berührt, benützt und betrachtet ein Fahrer die Sichtfläche, wodurch diese unter anderem mit Schweiß und Fett in Kontakt kommt.

Bei dem erfindungsgemäßen Lederverbund befindet sich der Kontaktbereich möglichst am tiefsten Punkt der Verbindung und hat so den größtmöglichen Abstand zur Sichtfläche des Lederverbunds. Dies hat den Vorteil, dass Eindringen von Schweiß und Fett in einem ausreichenden Maß verhindert wird, sodass unter anderem erstmals die Anforderungen an die Kontaktbereiche in Bezug auf ein diesbezügliches Kurzschlussrisiko erfüllt werden können. Hierdurch ist es erstmals möglich einen Lederverbund aus miteinander verbundenen und kontaktierten Verbundteilen, bei denen sich die Elektronikschichten im Bereich der Oberfläche des Lederverbunds befinden, im Automobilbereich einzusetzen,

In einer bevorzugten Ausführungsform ist die Verbindung als T-Stoß ausgebildet, wobei die miteinander verbundenen Verbundteile in dem Kontaktbereich keine Lederzurichtung auf der Oberfläche der Elektronikschichten aufweisen. Die Verbindung kann folglich sehr stark und möglichst diffusionsgeschlossen vernäht werden und der Kontaktbereich kann bei dieser Ausführungsform direkt in den T-Stoß eingebracht werden.

In einer bevorzugten alternativen Ausführungsform ist die Verbindung als T-Stoß ausgebildet, wobei die Elektronikschichten der miteinander verbundenen Verbundteile an Endabschnitten der Verbundteile aus dem T-Stoß herausgeführt und jeweils von der Verbindung weg um den zugehörigen Endabschnitt gebogen sind, wobei die Elektronikschichten mittels eines elektrisch leitenden Brückenelements im Bereich einer Rückseite miteinander verbunden sind, um den zumindest einen elektrischen Kontakt auszubilden. Der Kontaktbereich ist bei dieser Ausführungsform noch weiter von der Sichtfläche des Lederverbunds beabstandet. Durch das Brückenelement ist die Positionierung der Verbundteile zueinander erleichtert, und der zumindest eine gemeinsame elektrische Kontakt kann einfacher und mit höherer Qualität hergestellt werden.

Vorteilhaft sind die miteinander verbundenen Verbundteile im Bereich des T-Stoßes zusätzlich mechanisch, insbesondere mittels Vernietung, miteinander verbunden, wobei die zusätzliche mechanische Verbindung vorzugsweise einen größeren Abstand zu der Sichtfläche des Lederverbunds aufweist als der Kontaktbereich. Die Verbindung ist hierdurch insbesondere im Kontaktbereich noch stärker diffusionsgeschlossen.

In einer bevorzugten alternativen Ausführungsform ist die Verbindung als geschärfter und umgelegter Stoß ausgebildet, wobei die Elektronikschichten der miteinander verbundenen Verbundteile an der Rückseite und in dem Kontaktbereich des zugehörigen Verbundteiles keine Lederzurichtung auf der Oberfläche der Elektronikschicht aufweisen, wobei die Elektronikschichten über die Kontaktbereiche und ein elektrisch leitendes Brückenelement miteinander verbunden sind, um den zumindest einen elektrischen Kontakt auszubilden. Die Verbindung weist hierdurch eine geringere Stärke beziehungsweise Dicke auf, was vorteilhaft für die Applikation des Lederverbunds sein kann.

Zweckmäßig sind die Verbundteile Lederstanzlinge und/ oder Stanzlinge aus Kunstleder und/ oder aus Alcantara, und sind die Elektronikschichten, Polymerfolien mit aufgedruckten Leiterbahnen, wobei die Lederstanzlinge und die Elektronikschichten korrelierende Markierungen, insbesondere gestanzte Löcher, aufweisen. Dies ermöglicht zum einen große Freiheiten im Design und zum anderen ist so das präzise Verbinden der Verbundteile erleichtert.

Vorteilhaft ist zusätzliches Kontaktmaterial auf die Elektronikschichten aufgebracht und/ oder im Kontaktbereich eingebracht, wodurch der elektrische Kontakt im Kontaktbereich verbessert wird.

Vorteilhaft ist Versiegelungsmaterial um den Kontaktbereich und/ oder in einem Verbindungsbereich zwischen Sichtfläche und Nahtstelle eingebracht, wodurch der Kontaktbereich vor Umwelteinflüssen, insbesondere Feuchtigkeit, geschützt wird.

Vorteilhaft weist eine erste Elektronikschicht einen Dehnwert von 13% ± 5%, vorzugsweise von 10% bis 15%, aufweist und/ oder weist eine zweite Elektronikschicht einen Dehnwert von 15% ± 5%, vorzugsweise von 12% bis 17%, auf.

Die vorliegende Erfindung löst die Aufgabe weiters durch ein Verfahren zur Herstellung eines Lederverbunds, das durch folgende Verfahrensschritte gekennzeichnet ist:
I) Herstellung der zumindest zwei Verbundteile durch folgende Verfahrensschritte:
   A) Bereitstellen einer aus einer Tierhaut gefertigten Lederschicht oder einer Schicht aus Kunstleder;
   B) Aufbringen zumindest einer ersten Zurichtungsschicht der Lederzurichtung, insbesondere einer Grundierungsschicht, auf eine Lederoberfläche der Lederschicht oder einen Schleifgrund;
   C) Aufbringen, insbesondere mittels Laminieren, der Elektronikschicht auf eine Oberfläche der ersten oder zuletzt aufgebrachten Zurichtungsschicht um Funktionen abzubilden (Heizung, Schaltersysteme, Sensorik); und
   D) Aufbringen zumindest einer weiteren Zurichtungsschicht der Lederzurichtung auf die Elektronikschicht, wobei Kontaktbereiche der Verbundteile, die nach der Herstellung der Verbundteile keine Lederzurichtung aufweisen, maskiert, insbesondere abgeklebt, und/ oder nicht weiter beschichtet werden; und
II) Korreliertes Vernähen und/oder Verkleben von zumindest zwei Verbundteilen mit einander zugewandten Oberflächen der Lederzurichtung und/ oder der Elektronikschichten entlang zumindest einer Nahtstelle einer Verbindung, wodurch die Elektronikschichten der Verbundteile in zumindest einem Kontaktbereich der Verbindung, welcher Kontaktbereich einen größeren Abstand zu einer Sichtfläche des Lederverbunds aufweist als die Nahtstelle, zusätzlich zumindest einen gemeinsamen elektrischen Kontakt ausbilden.

Entsprechend der in Bezug auf den Lederverbund angeführten bevorzugten Ausführungsformen beziehungsweise Vorteile:
- werden die Verbundteile als T-Stoß vernäht, wobei die Elektronikschichten in den Kontaktbereichen, die nach dem korrelierten Vernähen den zumindest einen gemeinsamen elektrischen Kontakt ausbilden, während dem Aufbringen der zumindest einen weiteren Zurichtungsschicht maskiert.
- werden die Verbundteile als T-Stoß vernäht, wobei die nicht weiter beschichteten Elektronikschichten an Endabschnitten der Verbundteile aus dem T-Stoß herausgeführt und jeweils von der Verbindung weg um den zugehörigen Endabschnitt gebogen werden, wobei die Elektronikschichten mittels eines elektrisch leitenden Brückenelements im Bereich einer Rückseite miteinander verbunden werden, um den zumindest einen elektrischen Kontakt auszubilden.
- werden die Verbundteile im Bereich des T-Stoßes zusätzlich mechanisch, insbesondere mittels Vernietung, miteinander verbunden, wobei die zusätzliche mechanische Verbindung vorzugsweise einen größeren Abstand zu der Sichtfläche des Lederverbunds aufweist als der Kontaktbereich.
- werden die Verbundteile als geschärfter und umgelegter Stoß vernäht, wobei die Elektronikschichten während dem Aufbringen der zumindest einen weiteren Zurichtungsschicht in Kontaktbereichen derart maskiert werden, dass sie jeweils an der Rückseite des jeweiligen Verbundteiles keine Lederzurichtung aufweisen, wobei die Elektronikschichten über diese Kontaktbereiche mittels eines elektrisch leitenden Brückenelements verbunden werden, um den zumindest einen elektrischen Kontakt auszubilden.
- sind die Verbundteile Lederstanzlinge und/ oder Stanzlinge aus Kunstleder und/ oder aus Alcantara, und sind die Elektronikschichten Polymerfolien mit aufgedruckten Leiterbahnen und/ oder mit einem oder mehreren direkt gedruckten funktionalen und/ oder sensorischen Element/en, wobei korrelierende Markierungen auf/ in die Lederstanzlinge und/ oder die Stanzlinge aus Kunstleder und/ oder aus Alcantara und die Elektronikschichten aufgebracht/ eingebracht werden, insbesondere durch Stanzen von korrelierenden Löchern.
- wird, insbesondere mittels Walzen oder Stempelprägung, eine Lederprägung in die Lederzurichtung eingeprägt, wobei während dieser Prägung die korrelierenden Markierungen auf/ in die Lederstanzlinge und/ oder die Stanzlinge aus Kunstleder und/ oder aus Alcantara eingebracht werden.
- wird zusätzliches Kontaktmaterial auf die Elektronikschichten aufgebracht und/ oder im Kontaktbereich eingebracht.
- werden die Verbundteile mit leitfähigem Nahtmaterial, insbesondere Garn, vernäht.
- wird Versiegelungsmaterial um den Kontaktbereich und/ oder in einem Verbindungsbereich zwischen Sichtfläche und Nahtstelle eingebracht.

Vorteilhafte und nicht einschränkende Ausführungsformen der Erfindung werden nachfolgend anhand der Zeichnungen näher erläutert.
Figuren 1A und 1B zeigen in einer Schnittansicht (Querschnitt) eine Verbindung zweier Verbundteile eines Lederverbunds gemäß einem ersten Ausführungsbeispiel der Erfindung, wobei die Verbindung als T-Stoß ausgebildet ist.
Figur 2 zeigt in einer Schnittansicht (Querschnitt) eine Verbindung zweier Verbundteile eines Lederverbunds gemäß einem zweiten Ausführungsbeispiel der Erfindung, wobei die Verbindung als T-Stoß ausgebildet ist.
Figur 3 zeigt in einer Schnittansicht (Querschnitt) eine Verbindung zweier Verbundteile eines Lederverbunds gemäß einem dritten Ausführungsbeispiel der Erfindung, wobei die Verbindung als geschärfter und umgelegter Stoß ausgebildet ist.

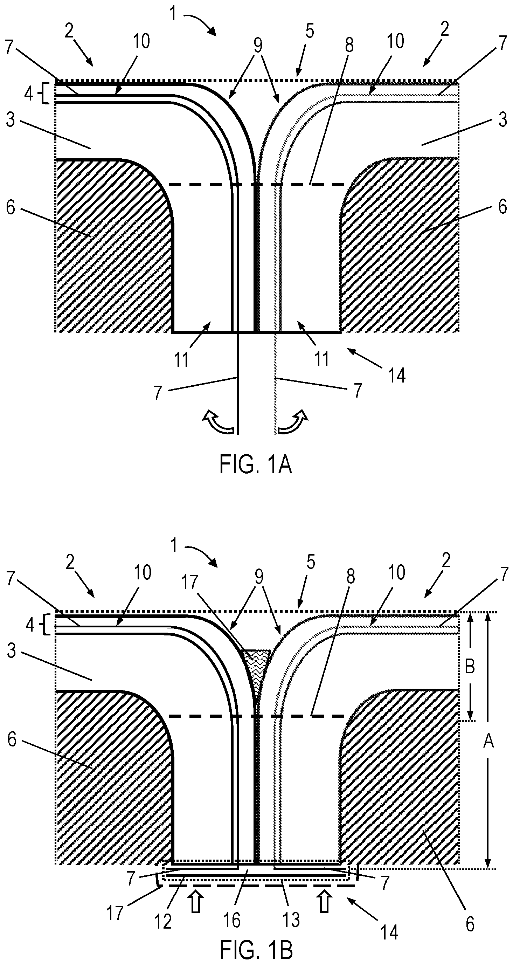

Figur 1A zeigt eine Verbindung 1 zweier Verbundteile 2 eines Lederverbunds gemäß einem ersten Ausführungsbeispiel der Erfindung. Die Verbundteile 2 sind beispielsweise Lederstanzlinge, in welchem Fall die Verbundteile 2 eine Lederschicht 3 und eine, auf einen Schleifgrund der Lederschicht 3 aufgebrachte Lederzurichtung 4 aufweisen. Ist die Lederschicht 3 aus einer Tierhaut gefertigt, kann sie auf einen Dehnwert von 10% ± 5%, vorzugsweise einen Dehnwert von 7% bis 12%, eingestellt werden. Dies wird mit, einem Fachmann bekannten Variationen des Gerbprozesses realisiert. Alternativ kann die Lederschicht 3 aus einem, dem Fachmann bekannten Kunstleder bestehen. Eine Grundierung, also eine erste Zurichtungsschicht oder erste Lackschicht der Lederzurichtung 4, kann aus, dem Fachmann bekannten Bindern und Füllstoffen auf Polyurethan und/oder Acrylatbasis oder aus Silikaten und organischen Füllstoffen auf Polymer und/oder Carbonbasis hergestellt sein. Die Grundierung kann auf einen Dehnwert von 12% ± 5%, vorzugsweise von 9% bis 14%, eingestellt werden.

Die Verbundteile 2 weisen nach dem Verbinden, beziehungsweise weist der fertiggestellte Lederverbund, eine Sichtfläche 5 auf, die nach Applikation/ in Einbaulage der Oberfläche des Lederverbunds entspricht und sich im Wesentlichen aus den Oberflächen 9 der Lederzurichtungen 4 zusammensetzt. Im Beispiel der Figuren 1A und 1B, bei dem der Lederverbund auf einem Lenkrad 6 appliziert ist, bildet die Sichtfläche 5 die Oberfläche des Lenkrads 6 und ist im größtmöglichen Ausmaß der Betrachtung und der Benutzung durch den Fahrer ausgesetzt, wodurch die Sichtfläche 5 unter anderem mit Schweiß und Fett in Kontakt kommt.

Die Verbundteile 2 weisen außerdem zumindest eine Elektronikschicht 7 auf. Die Elektronikschicht 7 kann auf einer ersten Zurichtungsschicht der Lederzurichtung 4, beispielsweise einer Grundierungsschicht, aufgebracht sein. Die Elektronikschicht 7 kann sich unter weiteren, beispielsweise einer, zwei, drei, vier, fünf oder mehr als fünf, Zurichtungsschichten der Lederzurichtung 4, beispielsweise Lackierungsschichten, befinden. Die Elektronikschicht 7 ist dann in die Lederzurichtung 4 eingebracht. Alternativ kann die Elektronikschicht 7 unbeschichtet oder bereits mit einer, zwei, drei, vier, fünf oder mehr als fünf Schutz- und/ oder Lackierungsschichten beschichtet auf die Lederzurichtung 4 aufgebracht werden.

Die Elektronikschichten 7 können Polymerfolien mit aufgedruckten Leiterbahnen sein, die in/ auf die Lederstanzlinge eingebracht/ aufgebracht sind. Alternativ oder zusätzlich können die Elektronikschichten 7 dem Fachmann bekannte Zurichtbestandteile sowie elektrisch leitfähige Additive sowohl auf Carbon wie auch auf Metall bzw. Polymerbasis umfassen.

Eine erste Elektronikschicht 7 kann mittels Siebdruck, Transfertechnik, Laminierprozess oder Ähnlichem, strukturiert oder unstrukturiert, aufgebracht beziehungsweise eingebracht werden. Alternativ dazu können auch vollflächige Auftragsverfahren wie Rackelauftrag oder Spritzverfahren verwendet werden. Die erste Elektronikschicht 7 kann auf einen Dehnwert von 13% ± 5%, vorzugsweise von 10% bis 15%, eingestellt werden. Um die Verbindung 1 zweier Verbundteile 2 zu optimieren kann:
1. im Design beziehungsweise der Oberflächenstruktur der Elektronikschicht 7 ausreichend "freier" Platz vorhanden sein, also Fläche ohne spezifische Funktion; und
2. die Leitfähigkeit pro cm des wässrigen Lacksystems basierend auf PU und/oder Acrylatsystemen im Bereich 0,25 bis 25 Ω, vorzugsweise 5±2 liegen. (Schicht 9 in Abbildung Figure V2)

Eine zweite und gegebenenfalls weitere Elektronikschicht/en 7 kann/können mittels Siebdruck, Transfertechnik, Laminierprozess oder Ähnlichem, strukturiert oder unstrukturiert, aufgebracht beziehungsweise eingebracht werden. Alternativ dazu können auch vollflächige Auftragsverfahren wie Rackelauftrag oder Spritzverfahren verwendet werden. Diese Elektronikschicht/en 7 kann/ können auf einen Dehnwert von 15% ± 5%, vorzugsweise von 12% bis 17%, eingestellt werden. Um die Verbindung 1 zweier Verbundteile 2 zu optimieren kann:
1. im Design beziehungsweise der Oberflächenstruktur der Elektronikschicht 7 ausreichend "freier" Platz vorhanden sein, also Fläche ohne spezifische Funktion;
2. die Leitfähigkeit des wässrigen Lacksystems basierend auf PU und/oder Acrylatsystemen im Bereich 0,25 bis 25 kΩ, vorzugsweise 5±2 liegen; und
3. die Optimierung des Dehnwerts beziehungsweise Dehnverhaltens mittels Variation der Feststoffe durchgeführt werden, und zwar beispielsweise durch:
   i. den Einsatz von funktionalen Zusatzstoffen/ Füllstoffen, beispielsweise Carbonpartikeln, Silberpartikeln, Silikaten und/ oder modifizierten Silikaten, Bindern auf Polyurethan oder Acrylatbasis; und/ oder
   ii. die Berücksichtigung von Kenngrößen wie Leitfähigkeit, Widerstand bzw. dem Fachmann bekannten chemischen und physikalischen Eigenschaften der Schichten.

Abdeckende weitere Zurichtungs- und/ oder Schutzschichten können aus, dem Fachmann bekannten Bindern und Füllstoffen auf Polyurethan und/oder Acrylatbasis und/oder aus Silikaten und organischen Füllstoffen auf Polymer und/oder Carbonbasis hergestellt sein. Diese Zurichtungs- und/ oder Schutzschichten kann/ können auf einen Dehnwert von 17% ± 5%, vorzugsweise von 14% bis 19%, eingestellt werden. Diese Werte können außerdem zur Optimierung von, dem Fachmann bekannten physikalischen und/ oder chemischen Parametern angepasst werden.

Wie oben beschrieben, können die Polymerfolien die weiteren Zurichtungs- und/ oder Schutzschichten bereits vor dem Aufbringen/ Einbringen aufweisen oder diese werden nach dem Aufbringen beschichtet. Alle beschriebenen Alternativen können zu einem Schichtaufbau gemäß den Figuren 1A und 1B führen.

Alternativ können die Verbundteile 2 Stanzlinge aus Kunstleder und/ oder aus Alcantara sein oder aus einem dem Fachmann bekannten Textilmaterial gestanzt oder zugeschnitten sein. Kunstleder ist dem Fachmann bekannt und kann beispielsweise ein Verbundstoff aus textilem Trägermaterial und einer auf der Sichtfläche geprägten Kunststoffschicht, insbesondere PVC, synthetischer Latex auf Acrylat- und/oder Polyurethanbasis, sein.

Die Verbindung 1 gemäß den Figuren 1A und 1B ist als T-Stoß ausgebildet und entlang zumindest einer Nahtstelle 8 mechanisch miteinander vernäht. Dabei sind die Verbundteile 2 so miteinander vernäht, dass die Narbenseiten einander zugewandt ausgerichtet sind. Dies bedeutet, dass die Oberflächen der Verbundteile 2, die den Oberflächen 9 der der Lederzurichtungen 4 entsprechen, einander zugewandt ausgerichtet sind.

Wie in Figur 1A dargestellt, sind die Elektronikschichten 7 der miteinander verbundenen Verbundteile 2 an Endabschnitten 11 der Verbundteile 2 aus dem T-Stoß herausgeführt, um jeweils von der Verbindung 1 weg um den zugehörigen Endabschnitt 11 gebogen zu werden, sodass die Elektronikschichten 7 mit ihrer Oberfläche 10 nach außen zu liegen kommen.

Zusätzliches Kontaktmaterial 16, beispielsweise eine elektrische Leitpaste, eine Metallfolie, Lot, ein elektrisch leitfähiger Kleber, insbesondere ein 1- oder 2 Komponentenkleber, und/ oder leitfähiges Nahtmaterial, insbesondere Garn, kann auf die Elektronikschichten 7 aufgebracht und/ oder im Kontaktbereich 13 eingebracht sein, wodurch der elektrische Kontakt im Kontaktbereich 13 verbessert wird.

Danach können die Elektronikschichten 7 mittels eines elektrisch leitenden Brückenelements 12 im Bereich einer Rückseite 14 miteinander verbunden werden, um in einem Kontaktbereich 13 der Verbindung 1 zumindest einen elektrischen Kontakt auszubilden, wie dies in Figur 1B dargestellt ist. Die Elektronikschichten 7 weisen in dem Kontaktbereich 13 keine Lederzurichtung 4 auf der Oberfläche 10 auf. Das Brückenelement 12 kann ebenfalls eine Polymerfolie mit aufgedruckten Leiterbahnen sein. Der Kontakt zwischen den Elektronikschichten 7 und dem Brückenelement 12 kann durch Prozesse wie Krimpen, Löten, Verpressen, vernähen mit leitfähigem Nahtmaterial, insbesondere Garn, oder Heißsiegeln zusätzlich fixiert werden.

Um den Kontaktbereich 13 und/ oder in einem Verbindungsbereich zwischen Sichtfläche 5 und Nahtstelle 8 kann Versiegelungsmaterial 17, beispielsweise isolierendes/r Vergussharz, Kleber oder Lack, eingebracht sein, wodurch der Kontaktbereich vor Umwelteinflüssen, insbesondere Feuchtigkeit, geschützt wird.

Der Kontaktbereich 13 weist vorteilhaft einen größeren Abstand A zur Sichtfläche 5 des Lederverbunds auf als die Nahtstelle 8, die einen Abstand B zur Sichtfläche 5 aufweist. Die Abstände A und B können entsprechend von Abweichungen der Lederstärke(n) und/ oder Prozesstoleranzen in einem dem Fachmann bekannten Ausmaß variieren, was jedoch keinen Einfluss auf das Kriterium hat, dass der Kontaktbereich 13 einen größeren Abstand A zur Sichtfläche 5 aufweist als die Nahtstelle 8. Der Kontaktbereich 13 liegt folglich möglichst am tiefsten Punkt der Verbindung 1, also im Bereich der Rückseite 14.

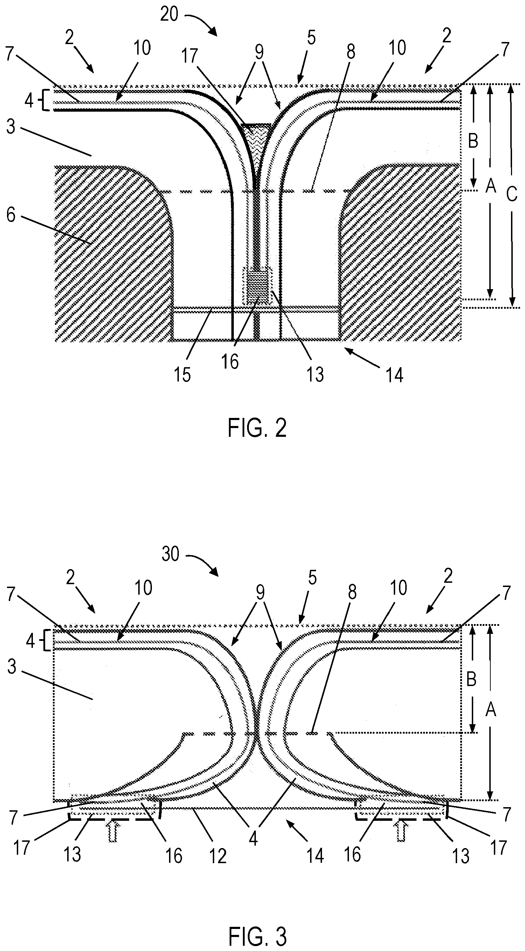

Die Verbindung 1 kann über eine zusätzliche mechanische Verbindung 15, insbesondere mittels Vernietung oder Krimpen (siehe auch Figur 2), miteinander verbunden sein.

Die Elektronikschichten 7 und/ oder der Kontaktbereich 13 kann/ können dann über eine elektrische Verbindung, insbesondere ein Kabel, mit einem weiteren elektrischen Kontakt, einer Steuereinheit, und/ oder einer Stromersorgungseinheit verbunden sein.

Figur 2 zeigt eine Verbindung 20 zweier Verbundteile 2 eines Lederverbunds gemäß einem zweiten Ausführungsbeispiel der Erfindung. Die Verbindung 20 entspricht großteils der Verbindung 1 gemäß dem ersten Ausführungsbeispiel, wobei gleiche oder im Wesentlichen gleiche Merkmale mit denselben Bezugszeichen bezeichnet sind.

Die Verbindung 20 ist als T-Stoß ausgebildet und entlang zumindest einer Nahtstelle 8 mechanisch miteinander vernäht. Dabei sind die Verbundteile 2 so miteinander vernäht, dass die Oberflächen 9 der Lederzurichtungen 4 und die Oberflächen 10 der Elektronikschichten 7 einander zugewandt ausgerichtet sind.

Die Elektronikschichten 7 weisen in dem Kontaktbereich 13 keine Lederzurichtung 4 auf der Oberfläche 10 der Elektronikschichten 7 auf. Dies kann beispielsweise durch Abkleben von Kontaktbereichen der Elektronikschichten 7 vor dem Aufbringen der restlichen Zurichtungsschichten der Lederzurichtung 4 erreicht werden, oder die Elektronikschichten 7 werden bereits in der gewünschten Konfiguration aufgebracht/ eingebracht. Diese "blank vorliegenden" Kontaktbereiche der Elektronikschichten 7 sind in dem Kontaktbereich 13 zueinander ausgerichtet miteinander vernäht und bilden den zumindest einen elektrischen Kontakt aus. Optional kann zusätzlich Kontaktmaterial 16, beispielsweise eine elektrische Leitpaste, eine Metallfolie oder Lot, eingebracht sein. Der Kontaktbereich 13 weist vorteilhaft einen größeren Abstand A zur Sichtfläche 5 des Lederverbunds auf als die Nahtstelle 8 (Abstand B).

Die Verbindung 20 kann über eine zusätzliche mechanische Verbindung 15, insbesondere mittels Vernietung oder Krimpen, miteinander verbunden sein, um die Stärke der Verbindung 1 zu erhöhen und den zumindest einen elektrischen Kontakt zu verbessern. Die zusätzliche mechanische Verbindung 15 weist vorzugsweise einen größeren Abstand C zu der Sichtfläche 5 des Lederverbunds auf als der Kontaktbereich 13 (Abstand A).

In einem Verbindungsbereich zwischen Sichtfläche 5 und Nahtstelle 8 kann Versiegelungsmaterial 17, beispielsweise isolierendes/r Vergussharz, Kleber oder Lack, eingebracht sein.

Figur 3 zeigt eine Verbindung 30 zweier Verbundteile 2 eines Lederverbunds gemäß einem dritten Ausführungsbeispiel der Erfindung. Die Verbindung 30 entspricht teilweise der Verbindung 1 gemäß dem ersten Ausführungsbeispiel, wobei gleiche oder im Wesentlichen gleiche Merkmale mit denselben Bezugszeichen bezeichnet sind.

Die Verbindung 30 ist als geschärfter und umgelegter Stoß ausgebildet und entlang zumindest einer Nahtstelle 8 mechanisch miteinander vernäht. Der geschärfte Stoß entsteht durch Abtragen der Lederschicht 3 am Rand, sodass die Kanten geschärft werden und eine Art Messerschneide entsteht. Die Lederschichten 3 werden dann an den jeweiligen Endabschnitten 11 umgelegt, wie in Abbildung 3 dargestellt. Die Verbundteile 2 sind derart miteinander vernäht, dass die Oberflächen 9 der Lederzurichtungen 4 einander zugewandt ausgerichtet sind. Diese Verbindung 30 weist vorteilhaft eine im Wesentlichen konstante Stärke/ Dicke auf, die in etwa dem Abstand A entspricht.

Die Elektronikschichten 7 der miteinander verbundenen Verbundteile 2 weisen an der Rückseite 14 und in dem Kontaktbereich 13 des zugehörigen Verbundteiles 2 keine Lederzurichtung 4 auf der Oberfläche 10 der Elektronikschicht 7 auf und sind über die Kontaktbereiche 13 und ein elektrisch leitendes Brückenelement 12 miteinander verbunden, um den zumindest einen elektrischen Kontakt auszubilden. Zusätzliches Kontaktmaterial 16, beispielsweise eine elektrische Leitpaste, eine Metallfolie oder Lot, kann auf die Elektronikschichten 7 aufgebracht und/ oder im Kontaktbereich 13 eingebracht sein. Die Kontaktbereiche 13 weisen vorteilhaft einen größeren Abstand A zur Sichtfläche 5 auf als die Nahtstelle 8 (Abstand B).

Um die Kontaktbereiche 13 kann Versiegelungsmaterial 17, beispielsweise isolierendes/r Vergussharz, Kleber oder Lack, eingebracht sein.

Ein beispielhaftes Verfahren zur Herstellung eines Lederverbunds aus zwei Verbundteilen 2 wird nachfolgend beschrieben, wobei alle zuvor beschriebenen Merkmale des Lederverbunds/ der Verbundteile 2 beziehungsweise der einzelnen Schichten der Verbundteile 2 auch auf dieses erfindungsgemäße Verfahren zu lesen sind:
Zuerst werden die Verbundteile 2 hergestellt, wobei in einem Verfahrensschritt A) eine aus einer Tierhaut gefertigte Lederschicht 3, beispielsweise ein getrocknetes Crustleder, das ein unbeschichtetes gegerbtes Leder ist, bereitgestellt wird. Die Lederschicht 3, beispielsweise das getrocknete Crustleder, kann geschliffen und mittels der Verwendung von angepassten Silikatpasten (Stukko) auf die Grundierung vorbereitet werden.

In einem Verfahrensschritt B) wird eine Grundierungsschicht als erste Zurichtungsschicht der Lederzurichtung 4 auf eine Lederoberfläche der Lederschicht 3 aufgebracht. Dies kann mittels Rollrakel ("revers" oder "syncro") mit einem und/oder zwei Auftragsschritten inklusive anschließender Trocknung durchgeführt werden.

Die grundierte Lederschicht 3 kann optisch auf Fehlstellen untersucht und markiert werden. Die grundierte Lederschicht 3 kann auf seine endgültige Stärke, beispielsweise auf 0,8 mm bis 1,8 mm, vorzugsweise auf 0,9 mm bis 1,3 mm, gespalten werden.

Nach dem Verfahrensschritt B) kann ein sogenannter "Vorstanzling" mit Markierungen, welche beispielsweise gestanzte Löcher sind, aus der Lederschicht 3 ausgestanzt werden. Die Markierungen können automatisch bzw. manuell detektierbar sein und passend zum Design des Lederverbunds hergestellt werden. Außerdem kann eine Polymerfolie mit der Elektronikschicht 3 bereitgestellt werden, die im Wesentlichen der Form des Vorstanzlings entsprechen kann. Die Polymerfolie kann außerdem Markierungen aufweisen, beispielsweise Löcher, die mit den Markierungen des Vorstanzlings korrelieren. Die Elektronikschicht 3 kann eines oder mehrere verschiedene funktionale und/ oder sensorische Elemente aufweisen, wie weiter unten näher beschrieben ist;

In einem Verfahrensschritt C) werden die Markierungen von Vorstanzling und Polymerfolie korrelierend positioniert, und dieses Schichtsystem aus Vorstanzling, also aus dem Verbundteil 2, und Polymerfolie wird laminiert, wodurch die Elektronikschicht 7 auf die Oberfläche der ersten oder zuletzt aufgebrachten Zurichtungsschicht der Lederzurichtung 4 aufgebracht wird. Das Laminieren kann bei einer Temperatur von 80 bis 140°C unter einem Druck von 4 bis 10 bar für eine Zeitdauer von 1 bis 10 Minuten durchgeführt werden. Es können mehrere die Elektronikschichten 7 aufgebracht werden. Alternativ oder zusätzlich kann/können die Elektronikschicht/en 7 durch Direktdruck mittels Siebdruckverfahren, Transferbeschichtung, Lamination von abbaubaren Folien wie Kollagen und/oder Gelatine, Inkjet Druck, Rakelauftrag und/ oder Spritzverfahren aufgebracht werden.

Die Anzahl der auf- oder einzubringenden Elektronikschichten 7 hängt von der Funktion des Lederverbunds 1 ab, beispielsweise kann die Funktion eine Heizfunktion und/ oder eine/ mehrere sensorische Funktion/en sein. Für eine Heizfunktion werden beispielsweise zwei bis fünf Elektronikschichten 7, vorzugsweise drei Elektronikschichten 7, verwendet. Werden Sensoren mit piezo- und/ oder pyroelektrischem Effekt verwendet, werden beispielsweise drei bis acht Elektronikschichten 7, vorzugsweise fünf Elektronikschichten 7, verwendet.

Nach dem Verfahrensschritt C) können in einem Verfahrensschritt D) weitere Zurichtungsschicht der Lederzurichtung 4 auf die Elektronikschicht 3 aufgebracht werden. Hierzu werden die Kontaktbereiche der Verbundteile 2, die nach der Herstellung der Verbundteile 2 keine Lederzurichtung 4 aufweisen sollen um den/ die Kontaktbereich/e 13 zu bilden, maskiert, insbesondere abgeklebt, und/ oder nicht weiter beschichtet. Alternativ kann die Elektronikschicht 7 schon mit zusätzlicher Beschichtung, beispielsweise weiteren Zurichtungs- und/ oder Schutzschichten, aufgebracht werden. Diese zusätzliche Beschichtung kann durch Direktdruck mittels Siebdruckverfahren, Rakelauftrag, und/ oder Spritzverfahren aufgebracht werden.

Nach dem Verfahrensschritt C) und/ oder D) kann eine Lederprägung durch Walzen oder Stempelprägung in die Lederzurichtung 4 eingebracht werden. In dieser Stempelprägung können auch korrelierenden Markierungen als Positionsmarken auf/ in die Lederstanzlinge eingebracht werden. Anhand dieser Markierungen können dann die Verbundteile 2 als exakte Lederstanzlinge gestanzt werden. Alternativ können auch Verbundteile 2 aus Kunstleder und/ oder aus Alcantara bereitgestellt werden, die nach obigen Verfahrensschritten hergestellt sind.

Optional kann zusätzliches Kontaktmaterial 16 auf die Elektronikschichten 7 aufgebracht und/ oder im Kontaktbereich 13 eingebracht werden.

In einem nächsten Schritt werden die Verbundteile 2 anhand der Markierungen und mit einander zugewandten Oberflächen 9 und/ oder 10 entlang zumindest einer Nahtstelle 8 positioniert und mechanisch miteinander vernäht und/ oder verklebt, wodurch die Elektronikschichten 7 der Verbundteile 2 in zumindest einem Kontaktbereich 13 zumindest einen gemeinsamen elektrischen Kontakt ausbilden. Vor und/ oder nach dem Vernähen/ Verbinden kann die Funktion des elektrischen Kontakts beziehungsweise der Elektronikschichten 7 überprüft werden.

Optional kann abschließend um den Kontaktbereich 13 und/ oder in einem Verbindungsbereich zwischen Sichtfläche 5 und Nahtstelle 8 Versiegelungsmaterial 17 eingebracht werden.

Anstatt eines Verbundteiles 2 und/ oder zusätzlich kann auch eine Zu/Ableitung, insbesondere ein Breitbandkabel, oder dergleichen mit einem der Verbundteile 2 verbunden werden, um so die Anbindung an ein elektronisches System oder eine elektronische Komponente, wie ein Auswertesystem, eine Stromquelle oder einen Energiespeicher, herzustellen. Diese Zu/Ableitung kann mittels nähen, kleben, nieten, schrauben und/ oder verpressen befestigt werden.

Die Elektronikschichten 7 können eines oder mehrere verschiedene funktionale und/ oder sensorische Elemente aufweisen, beispielsweise ein Heizelement, ein pyroelektrisches Element, einen Drucksensor, einen Schallsensor, einen Lichtsensor, einen Luftfeuchtesensor, einen Temperatursensor, einen Beschleunigungssensor, einen Lagesensor, ein Datenübertragungselement, ein Element zur drahtlosen Datenübertragung, ein Element zur Übertragung von Daten im Bluetooth-Standard, ein RFID-Element, ein NFC-Element, ein Element zur Energiespeicherung oder zur Energieabgabe, ein Schalterelement und/ oder ein Eingabeelement.

Der erfindungsgemäße Lederverbund kann bei der Herstellung von beispielsweise folgenden Produkten verwendet werden: Lederlenkräder, Verkleidungsteile wie lederbezogene Türen, Armauflagen, Cockpitteile oder Airbag-Kappen, Polsterleder, Leder für Aviation-Anwendungen, Schuhwerk, Bekleidung, Koffer, Taschen und Modeaccessoires. Diesen und weiteren Produkten können durch Beschichtung oder Applikation mit dem erfindungsgemäßen Lederverbund elektrische Funktionalitäten beziehungsweise Anwendungen zugeordnet werden. So kann beispielsweise mit dem Lederlenkrad die Temperatur und Feuchtigkeit der Hände des Fahrers gemessen werden, bzw. via Druck ob der Fahrer das Lenkrad in Händen hält, um mit diesen und anderen Messdaten auf die Müdigkeit und Gesundheit des Fahrers zu schließen. Druck- und Schallsensoren in der Elektronikschicht eines Fernsehsessels können die gleichmäßigen Atembewegungen einer auf dem Fernsehsessel sitzenden Person detektieren und, wenn diese schläft, die Sitzposition automatisch in eine Schlafposition verändern. Gemäß einem weiteren Anwendungsbeispiel kann die Elektronikschicht sichtbar sein, realisiert beispielsweise durch eine Leuchtfunktion oder ein gedrucktes Display. Anhand dieser einfachen Beispiele ist dem Fachmann der Umfang der möglichen Anwendungen der erfindungsgemäßen Lederverbunds verständlich.

## Patentansprüche

1. Lederverbund umfassend zumindest zwei Verbundteile (2), die durch folgenden Schichtaufbau gekennzeichnet sind:
- eine aus einer Tierhaut gefertigte Lederschicht (3) oder eine Schicht aus Kunstleder;
- eine, auf eine Lederoberfläche der Lederschicht (3) oder einen Schleifgrund aufgebrachte Lederzurichtung (4),
- zumindest eine Elektronikschicht (7), die in die Lederzurichtung (4) eingebracht oder auf die Lederzurichtung (4) aufgebracht ist, **dadurch gekennzeichnet, dass** zumindest zwei Verbundteile (2) mit einander zugewandten Oberflächen (9, 10) der Lederzurichtung (4) und/ oder der Elektronikschichten (7) entlang zumindest einer Nahtstelle (8) einer Verbindung (1, 20, 30) mechanisch miteinander vernäht sind, wobei die Elektronikschichten (7) der Verbundteile (2) in zumindest einem Kontaktbereich (13) der Verbindung (1, 20, 30), welcher Kontaktbereich (13) einen größeren Abstand (A) zu einer Sichtfläche (5) des Lederverbunds aufweist als die Nahtstelle (8), zusätzlich zumindest einen gemeinsamen elektrischen Kontakt ausbilden.

2. Lederverbund gemäß Anspruch 1, wobei die Verbindung (1) als T-Stoß ausgebildet ist, wobei die Elektronikschichten (7) der miteinander verbundenen Verbundteile (2) an Endabschnitten (11) der Verbundteile (2) aus dem T-Stoß herausgeführt und jeweils von der Verbindung (1) weg um den zugehörigen Endabschnitt (11) gebogen sind, wobei die Elektronikschichten (7) mittels eines elektrisch leitenden Brückenelements (12) im Bereich einer Rückseite (14) miteinander verbunden sind, um den zumindest einen elektrischen Kontakt auszubilden.

3. Lederverbund gemäß Anspruch 2, wobei die miteinander verbundenen Verbundteile (2) im Bereich des T-Stoßes zusätzlich mechanisch, insbesondere mittels Vernietung, miteinander verbunden sind, wobei die zusätzliche mechanische Verbindung (15) vorzugsweise einen größeren Abstand (C) zu der Sichtfläche (5) des Lederverbunds aufweist als der Kontaktbereich (13).

4. Lederverbund gemäß Anspruch 1, wobei die Verbindung (30) als geschärfter und umgelegter Stoß ausgebildet ist, wobei die Elektronikschichten (7) der miteinander verbundenen Verbundteile (2) an der Rückseite (14) und in dem Kontaktbereich (13) des zugehörigen Verbundteiles (2) keine Lederzurichtung (4) auf der Oberfläche (10) der Elektronikschicht (7) aufweisen, wobei die Elektronikschichten (7) über die Kontaktbereiche (13) und ein elektrisch leitendes Brückenelement (12) miteinander verbunden sind, um den zumindest einen elektrischen Kontakt auszubilden.

5. Lederverbund gemäß einem der Ansprüche 1 bis 4, wobei die Verbundteile (2) Lederstanzlinge und/ oder Stanzlinge aus Kunstleder und/ oder aus Alcantara sind, und wobei die Elektronikschichten (7) Polymerfolien mit aufgedruckten Leiterbahnen sind, wobei die Lederstanzlinge und die Elektronikschichten (7) korrelierende Markierungen, insbesondere gestanzte Löcher, aufweisen.

6. Lederverbund gemäß einem der Ansprüche 1 bis 5, wobei zusätzliches Kontaktmaterial (16) auf die Elektronikschichten (7) aufgebracht und/ oder im Kontaktbereich (13) eingebracht ist.

7. Lederverbund gemäß einem der Ansprüche 1 bis 6, wobei Versiegelungsmaterial (17) um den Kontaktbereich (13) und/ oder in einem Verbindungsbereich zwischen Sichtfläche (5) und Nahtstelle (8) eingebracht ist.

8. Lederverbund gemäß einem der Ansprüche 1 bis 7, wobei eine erste Elektronikschicht 7 einen Dehnwert von 13% ± 5%, vorzugsweise von 10% bis 15%, aufweist und/ oder wobei eine zweite Elektronikschicht 7 einen Dehnwert von 15% ± 5%, vorzugsweise von 12% bis 17%, aufweist.

9. Verfahren zur Herstellung eines Lederverbunds umfassend zumindest zwei Verbundteile (2), umfassend die folgenden Verfahrensschritte:
I) Herstellung der zumindest zwei Verbundteile (2) durch folgende Verfahrensschritte:
A) Bereitstellen einer aus einer Tierhaut gefertigten Lederschicht (3) oder einer Schicht aus Kunstleder;
B) Aufbringen zumindest einer ersten Zurichtungsschicht der Lederzurichtung (4), insbesondere einer Grundierungsschicht, auf eine Lederoberfläche der Lederschicht (3) oder einen Schleifgrund;
C) Aufbringen, insbesondere mittels Laminieren oder Direktdruck, der Elektronikschicht (7) auf eine Oberfläche der ersten oder zuletzt aufgebrachten Zurichtungsschicht; und
D) Aufbringen zumindest einer weiteren Zurichtungsschicht der Lederzurichtung (4) auf die Elektronikschicht (7), wobei Kontaktbereiche (13) der Verbundteile (2), die nach der Herstellung der Verbundteile (2) keine Lederzurichtung (4) aufweisen, maskiert, insbesondere abgeklebt, und/ oder nicht weiter beschichtet werden; und
II) Korreliertes Vernähen und/oder Verkleben von zumindest zwei Verbundteilen (2) mit einander zugewandten Oberflächen (9, 10) der Lederzurichtung (4) und/ oder der Elektronikschichten (7) entlang zumindest einer Nahtstelle (8) einer Verbindung (1, 20, 30), wodurch die Elektronikschichten (7) der Verbundteile (2) in zumindest einem Kontaktbereich (13) der Verbindung (1, 20, 30), welcher Kontaktbereich (13) einen größeren Abstand (A) zu einer Sichtfläche (5) des Lederverbunds aufweist als die Nahtstelle (8), zusätzlich zumindest einen gemeinsamen elektrischen Kontakt ausbilden.

10. Verfahren gemäß Anspruch 9, wobei die Verbundteile (2) als T-Stoß vernäht werden, wobei die Elektronikschichten (7) in den Kontaktbereichen (13), die nach dem korrelierten Vernähen den zumindest einen gemeinsamen elektrischen Kontakt ausbilden, während dem Aufbringen der zumindest einen weiteren Zurichtungsschicht maskiert werden.

11. Verfahren gemäß Anspruch 9, wobei die Verbundteile (2) als T-Stoß vernäht werden, wobei die nicht weiter beschichteten Elektronikschichten (7) an Endabschnitten (11) der Verbundteile (2) aus dem T-Stoß herausgeführt und jeweils von der Verbindung (1) weg um den zugehörigen Endabschnitt (11) gebogen werden, wobei die Elektronikschichten (7) mittels eines elektrisch leitenden Brückenelements (12) im Bereich einer Rückseite (14) miteinander verbunden werden, um den zumindest einen elektrischen Kontakt auszubilden.

12. Verfahren gemäß einem der Ansprüche 10 oder 11, wobei die Verbundteile (2) im Bereich des T-Stoßes zusätzlich mechanisch, insbesondere mittels Vernietung, miteinander verbunden werden, wobei die zusätzliche mechanische Verbindung (15) vorzugsweise einen größeren Abstand (C) zu der Sichtfläche (5) des Lederverbunds aufweist als der Kontaktbereich (13).

13. Verfahren gemäß Anspruch 9, wobei die Verbundteile (2) als geschärfter und umgelegter Stoß vernäht werden, wobei die Elektronikschichten (7) während dem Aufbringen der zumindest einen weiteren Zurichtungsschicht in Kontaktbereichen (13) derart maskiert werden, dass sie jeweils an der Rückseite (14) des jeweiligen Verbundteiles (2) keine Lederzurichtung (4) aufweisen, wobei die Elektronikschichten (7) über diese Kontaktbereiche (13) mittels eines elektrisch leitenden Brückenelements (12) verbunden werden, um den zumindest einen elektrischen Kontakt auszubilden.

14. Verfahren gemäß einem der Ansprüche 9 bis 13, wobei die Verbundteile (2) Lederstanzlinge und/ oder Stanzlinge aus Kunstleder und/ oder aus Alcantara sind, und wobei die Elektronikschichten (7) Polymerfolien mit aufgedruckten Leiterbahnen sind, wobei korrelierende Markierungen auf/ in die Lederstanzlinge und/ oder die Stanzlinge aus Kunstleder und/ oder aus Alcantara und die Elektronikschichten (7) aufgebracht/ eingebracht werden, insbesondere durch Stanzen von korrelierenden Löchern.

15. Verfahren gemäß Anspruch 14, wobei, insbesondere mittels Walzen oder Stempelprägung, eine Lederprägung in die Lederzurichtung (4) eingeprägt wird, wobei während dieser Prägung die korrelierenden Markierungen auf/ in die Lederstanzlinge und/ oder die Stanzlinge aus Kunstleder und/ oder aus Alcantara eingebracht werden.

16. Verfahren gemäß einem der Ansprüche 9 bis 15, wobei vor dem Verfahrensschritt II) zusätzliches Kontaktmaterial (16) auf die Elektronikschichten (7) aufgebracht und/ oder im Kontaktbereich (13) eingebracht wird.

17. Verfahren gemäß einem der Ansprüche 9 bis 16, wobei die Verbundteile (2) mit leitfähigem Nahtmaterial, insbesondere Garn, vernäht werden.

18. Verfahren gemäß einem der Ansprüche 9 bis 17, wobei nach dem Verfahrensschritt II) Versiegelungsmaterial (17) um den Kontaktbereich (13) und/ oder in einem Verbindungsbereich zwischen Sichtfläche (5) und Nahtstelle (8) eingebracht wird.

## Claims

1. A leather composite comprising at least two composite parts (2), which are **characterized by** the following layer structure:
- a leather layer (3) manufactured from an animal skin or a layer of artificial leather;
- a leather finishing (4) applied to a leather surface of the leather layer (3) or a sanding base,
- at least one electronics layer (7) incorporated into the leather finishing (4) or applied to the leather finishing (4), **characterized in that**
at least two composite parts (2) with mutually facing surfaces (9, 10) of the leather finishing (4) and/or of the electronics layers (7) are mechanically sewn together along at least one seam (8) of a connection (1, 20, 30), with the electronics layers (7) of the composite parts (2) in at least one contact area (13) of the connection (1, 20, 30), the contact area (13) being at a greater distance (A) from a visible surface (5) of the leather composite than the seam (8), additionally forming at least one common electrical contact.

2. The leather composite according to claim 1, wherein the connection (1) is designed as a T-joint, wherein the electronics layers (7) of the interconnected composite parts (2) are guided out of the T-joint at end sections (11) of the composite parts (2) and, in each case, are bent away from the connection (1) and around the associated end section (11), the electronics layers (7) being interconnected in the region of a rear side (14) by means of an electrically conductive bridge element (12) in order to form the at least one electrical contact.

3. The leather composite according to claim 2, wherein the interconnected composite parts (2) are additionally interconnected mechanically, in particular by riveting, in the area of the T-joint, with the additional mechanical connection (15) preferably being at a greater distance (C) from the visible surface (5) of the leather composite than the contact area (13).

4. The leather composite according to claim 1, wherein the connection (30) is designed as a sharpened and folded joint, wherein the electronics layers (7) of the interconnected composite parts (2) on the rear side (14) and in the contact area (13) of the associated composite part (2) have no leather finishing (4) on the surface (10) of the electronics layer (7), the electronics layers (7) being interconnected via the contact areas (13) and an electrically conductive bridge element (12) in order to form the at least one electrical contact.

5. The leather composite according to any of claims 1 to 4, wherein the composite parts (2) are leather diecuts and/or diecuts made of artificial leather and/or Alcantara, and wherein the electronics layers (7) are polymer films with strip conductors printed on them, the leather diecuts and the electronics layers (7) having correlated markings, in particular punched holes.

6. The leather composite according to any of claims 1 to 5, wherein an additional contact material (16) is applied to the electronics layers (7) and/or incorporated in the contact area (13).

7. The leather composite according to any of claims 1 to 6, wherein a sealing material (17) is incorporated around the contact area (13) and/or in a connection area between the visible surface (5) and the seam (8).

8. The leather composite according to any of claims 1 to 7, wherein a first electronics layer 7 has an elongation value of 13% ± 5%, preferably from 10% to 15%, and/or a second electronics layer 7 has an elongation value of 15% ± 5%, preferably from 12% to 17%.

9. A process for producing a leather composite comprising at least two composite parts (2), **characterized by** the following process steps:
I) producing the at least two composite parts (2) by the following process steps:
A) providing a leather layer (3) manufactured from an animal skin or a layer of artificial leather;
B) applying at least one first finishing layer of the leather finishing (4), in particular a primer layer, to a leather surface of the leather layer (3) or a sanding base;
C) applying, in particular by means of lamination or direct print, the electronics layer (7) to a surface of the first or last-applied finishing layer; and
D) applying at least one further finishing layer of the leather finishing (4) to the electronics layer (7), wherein contact areas (13) of the composite parts (2), which, after the production of the composite parts (2), have no leather finishing (4), are masked, in particular taped off, and/or not coated any further; and
II) sewing and/or gluing at least two composite parts (2) with mutually facing surfaces (9, 10) of the leather finishing (4) and/or the electronics layers (7) in a correlated manner along at least one seam (8) of a connection (1, 20, 30), whereby the electronics layers (7) of the composite parts (2) in at least one contact area (13) of the connection (1, 20, 30), which contact area (13) is at a greater distance (A) from a visible surface (5) of the leather composite than the seam (8), additionally form at least one common electrical contact.

10. The process according to claim 9, wherein the composite parts (2) are sewn up as a T-joint, with the electronics layers (7) in the contact areas (13) forming the at least one common electrical contact after the correlated sewing being masked during the application of the at least one further finishing layer.

11. The process according to claim 9, wherein the composite parts (2) are sewn up as a T-joint, wherein the electronics layers (7) that are not coated any further are guided out of the T-joint at end sections (11) of the composite parts (2) and, in each case, are bent away from the connection (1) and around the associated end section (11), the electronics layers (7) being interconnected in the region of a rear side (14) by means of an electrically conductive bridge element (12) in order to form the at least one electrical contact.

12. The process according to any of claims 10 or 11, wherein the composite parts (2) are additionally interconnected mechanically, in particular by riveting, in the area of the T-joint, with the additional mechanical connection (15) preferably being at a greater distance (C) from the visible surface (5) of the leather composite than the contact area (13).

13. The process according to claim 9, wherein the composite parts (2) are sewn up as a sharpened and folded joint, wherein the electronics layers (7) are masked during the application of the at least one further finishing layer in contact areas (13) in such a way that they each have no leather finishing (4) on the rear side (14) of the respective composite part (2), the electronics layers (7) being connected across those contact areas (13) by means of an electrically conductive bridge element (12) in order to form the at least one electrical contact.

14. The process according to any of claims 9 to 13, wherein the composite parts (2) are leather diecuts and/or diecuts made of synthetic leather and/or Alcantara, and wherein the electronics layers (7) are polymer films with strip conductors printed on them, with correlated markings being applied onto/introduced into the leather diecuts and/or the diecuts made of artificial leather and/or Alcantara and the electronics layers (7), in particular by punching correlated holes.

15. The process according to claim 14, wherein leather embossing is stamped into the leather finishing (4), in particular by means of rolling or stamp embossing, wherein the correlated markings are introduced onto/into the leather diecuts and/or the diecuts made of artificial leather and/or Alcantara during this embossing.

16. The process according to any of claims 9 to 15, wherein an additional contact material (16) is applied to the electronics layers (7) and/or incorporated in the contact area (13) before process step II).

17. The process according to any of claims 9 to 16, wherein the composite parts (2) are sewn up with a conductive suture material, in particular a yarn.

18. The process according to any of claims 9 to 17, wherein a sealing material (17) is introduced around the contact area (13) and/or in a connection area between the visible surface (5) and the seam (8) after process step II).

## Revendications

1. Cuir reconstitué comprenant au moins deux pièces d'assemblage (2) qui sont **caractérisées par** la structure stratifiée suivante :
- une couche de cuir (3) fabriquée à partir de peau d'animal ou une couche de cuir synthétique,
- un corroyage du cuir (4) appliqué sur une surface du cuir de la couche de cuir (3) ou un apprêt de ponçage et
- au moins une couche électronique (7) qui est insérée dans le corroyage du cuir (4) ou appliquée sur le corroyage du cuir (4), **caractérisé en ce qu'**au moins deux pièces d'assemblage (2) avec des faces supérieures (9, 10) du corroyage du cuir (4) et/ou des couches électroniques (7) tournées l'une vers l'autre sont cousues entre elles mécaniquement le long d'au moins une couture (8) d'un assemblage (1, 20, 30), les couches électroniques (7) des pièces d'assemblage (2) formant en outre au moins un contact électrique commun dans au moins une zone de contact (13) de l'assemblage (1,20, 30), laquelle zone de contact (13) présente une plus grande distance (A) par rapport à une face visible (5) du cuir reconstitué que la couture (8).

2. Cuir reconstitué selon la revendication 1, dans lequel l'assemblage (1) est configuré comme un joint en T, dans lequel les couches électroniques (7) des pièces d'assemblage (2) reliées entre elles sont extraites du joint en T au niveau des sections terminales (11) des pièces d'assemblage (2) et sont chacune coudées au loin de l'assemblage (1) autour de la section terminale (11) correspondante, et dans lequel les couches électroniques (7) sont reliées entre elles au moyen d'un élément de pontage électro-conducteur (12) dans la région d'une face arrière (14) pour former l'au moins un contact électrique.

3. Cuir reconstitué selon la revendication 2, dans lequel les pièces d'assemblage (2) reliées entre elles sont en outre reliées entre elles mécaniquement dans la région du joint en T, en particulier au moyen d'un rivetage, et dans lequel la liaison mécanique supplémentaire (15) présente de préférence une plus grande distance (C) par rapport à la face visible (5) du cuir reconstitué que la zone de contact (13).

4. Cuir reconstitué selon la revendication 1, dans lequel l'assemblage (30) est configuré comme un joint aiguisé et replié, dans lequel les couches électroniques (7) des pièces d'assemblage (2) reliées entre elles ne présentent pas de corroyage du cuir (4) sur la surface (10) de la couche électronique (7) sur la face arrière (14) et dans la zone de contact (13) de la pièce d'assemblage (2) correspondante, et dans lequel les couches électroniques (7) sont reliées entre elles par les zones de contact (13) et un élément de pontage électro-conducteur (12) pour constituer l'au moins un contact électrique.

5. Cuir reconstitué selon une des revendications 1 à 4, dans lequel les pièces d'assemblage (2) sont des coupons de cuir et/ou des coupons en cuir synthétique et/ou en alcantara, et dans lequel les couches électroniques (7) sont des feuilles de polymère avec des pistes conductrices imprimées, les coupons de cuir et les couches électroniques(7) présentant des repères de corrélation, en particulier des trous estampés.

6. Cuir reconstitué selon une des revendications 1 à 5, dans lequel un matériau de contact supplémentaire (16) est appliqué sur les couches électroniques (7) et/ou inséré dans la zone de contact (13).

7. Cuir reconstitué selon une des revendications 1 à 6, dans lequel un matériau de scellage (17) est inséré autour de la zone de contact (13) et/ou dans une zone de liaison entre la face visible (5) et la couture (8).

8. Cuir reconstitué selon une des revendications 1 à 7, dans lequel une première couche électronique 7 présente un taux d'élasticité de 13% ± 5%, de préférence de 10% à 15% et/ou dans lequel une deuxième couche électronique 7 présente un taux d'élasticité de 15% ± 5%, de préférence de 12% à 17%.

9. Procédé pour la fabrication d'un cuir reconstitué comprenant au moins deux pièces d'assemblage :
I) fabrication des au moins deux pièces d'assemblage (2) par les étapes de procédé suivantes :
A) préparation d'une couche de cuir (3) ou d'une couche de cuir synthétique fabriquée à partir d'une peau d'animal,
B) application d'au moins une première couche de corroyage du cuir (4), en particulier d'une couche d'apprêt, sur une surface de cuir de la couche de cuir (3) ou un apprêt de ponçage,
C) application, en particulier par laminage ou impression directe, de la couche électronique (7) sur une surface de la première ou de la dernière couche de corroyage appliquée, et
D) application d'au moins une autre couche de corroyage du cuir (4) sur la couche électronique (7), les zones de contact (13) des pièces d'assemblage (2) qui ne présentent pas de corroyage du cuir (4) après la fabrication des pièces d'assemblage (2) étant masquées, en particulier recouvertes d'adhésif, et/ou non revêtues, et
II) couture et/ou collage corrélé d'au moins deux pièces d'assemblage (2) avec des surfaces (9, 10) orientées l'une vers l'autre du corroyage du cuir (4) et/ou des couches électroniques (7) le long d'au moins une couture d'un assemblage (1, 20, 30), de sorte que les couches électroniques (7) des pièces d'assemblage (2) forment en outre au moins un contact électrique commun dans au moins une zone de contact (13) de l'assemblage (1,20, 30), laquelle zone de contact (13) présente une plus grande distance (A) par rapport à une face visible (5) du cuir reconstitué que la couture (8).

10. Procédé selon la revendication 9, selon lequel les pièces d'assemblage (2) sont cousues comme un joint en T et selon lequel les couches électroniques (7), dans les zones de contact (13) qui forment l'au moins un contact électrique commun après la couture corrélée, sont masquées pendant l'application de l'au moins une autre couche de corroyage.

11. Procédé selon la revendication 9, selon lequel les pièces d'assemblage (2) sont cousues comme un joint en T, selon lequel les couches électroniques (7) non à nouveau recouvertes sont extraites du joint en T au niveau des sections terminales (11) des pièces d'assemblage (2) et sont chacune coudées au loin d'assemblage (1) autour de la section terminale (11) correspondante, et selon lequel les couches électroniques (7) sont reliées entre elles au moyen d'un élément de pontage électro-conducteur (12) dans la région d'une face arrière (14) pour former l'au moins un contact électrique.

12. Procédé selon une des revendications 10 ou 11, selon lequel les pièces d'assemblage (2) sont en outre reliées entre elles mécaniquement dans la région du joint en T, en particulier au moyen d'un rivetage, et selon lequel la liaison mécanique supplémentaire (15) présente de préférence une plus grande distance (C) par rapport à la face visible (5) du cuir reconstitué que la zone de contact (13).

13. Procédé selon la revendication 9, selon lequel les pièces d'assemblage (2) sont cousues comme un un joint aiguisé et replié, selon lequel les couches électroniques (7) sont masquées pendant l'application de l'au moins une autre couche de corroyage dans les zones de contact, de sorte qu'elle ne présentent pas de corroyage du cuir (4) sur la face arrière (14) de la pièce d'assemblage (2) correspondante, et selon lequel les couches électroniques (7) sont reliées entre elles sur ces zones de contact (13) au moyen d'un élément de pontage électro-conducteur (12) pour constituer l'au moins un contact électrique.

14. Procédé selon une des revendications 9 à 13, selon lequel les pièces d'assemblage (2) sont des coupons de cuir et/ou des coupons en cuir synthétique et/ou en alcantara, selon lequel les couches électroniques (7) sont des feuilles de polymère avec des pistes conductrices imprimées et selon lequel des repères de corrélation sont appliqués/introduits sur/dans les coupons de cuir et/ou le coupons en cuir synthétique et/ou en alcantara et les couches électroniques(7), en particulier par estampage de trous de corrélation.

15. Procédé selon la revendication 14, selon lequel un gaufrage façon cuir est gravé dans le corroyage du cuir (4), en particulier par roulage ou par estampage, les repères de corrélation étant appliqués/introduits sur/dans les coupons de cuir et/ou les coupons en cuir synthétique et/ou en alcantara pendant ce gaufrage.

16. Procédé selon une des revendications 9 à 15, selon lequel un matériel de contact supplémentaire (16) a été appliqué sur les couches électroniques (7) et/ou introduit dans la zone de contact (13) avant l'étape de procédé II).

17. Procédé selon une des revendications 9 à 16, selon lequel les pièces d'assemblage (2) sont cousues avec du matériel de couture conducteur, en particulier avec du fil.

18. Procédé selon une des revendications 9 à 17, selon lequel un matériel de scellage (17) a été introduit autour de la zone de contact (13) et/ou dans une zone de liaison entre la face visible (5) et la couture (8) après l'étape de procédé II).
